# EUROPÄISCHE PATENTANMELDUNG

(11) **EP 3 650 140 A1**
(43) Veröffentlichungstag der Anmeldung: **13.05.2020**
(21) Anmeldenummer: 18205685.3
(22) Anmeldetag: 12.11.2018
(51) Int. Cl.: B22F 3/105, B23K 15/00, B33Y 10/00, B33Y 50/02, B23K 26/342, B29C 64/393

(54) **VERFAHREN ZUR ADDITIVEN FERTIGUNG UND FERTIGUNGSANLAGE**

(71) Anmelder: Siemens Aktiengesellschaft, 80333 München (DE)
(72) Erfinder: Berners, Thomas, 52072 Aachen (DE); Regulin, Daniel, 81825 München (DE); Schneider, Heinz-Ingo, 85598 Baldham (DE); Brecher, Christian, 52074 Aachen (DE)

(57) **Zusammenfassung**

Das Verfahren dient zur additiven Fertigung eines Werkstücks mittels eines Bearbeitungskopfs. Bei dem Verfahren wird die Geschwindigkeit des Bearbeitungskopfs in Abhängigkeit von einer vorgegebenen und/oder erfassten Geometrie des Werkstücks gestellt.

Die Fertigungsanlage dient zur additiven Fertigung und umfasst einen Bearbeitungskopf und eine Steuerung zur Bewegung des Bearbeitungskopfs. Die Steuerung der Fertigungsanlage ist zur Ausführung des Verfahrens ausgebildet.

## Beschreibung

Die Erfindung betrifft ein Verfahren zur additiven Fertigung sowie eine Fertigungsanlage.

Es ist bekannt, Werkstücke mittels Laserauftragsschweißens additiv zu fertigen.

Insbesondere beim Laserauftragsschweißen in Form der "Laser Metal Deposition" (LMD) wird ein Werkstoff pulverförmig durch eine Düse geleitet und mittels eines Lasers aufgeschmolzen. Der Werkstoff wird lagenweise abgeschieden und so das Werkstück Lage für Lage gefertigt. Derart gefertigte Werkstücke weisen jedoch prozessbedingt Werkstückgeometrien auf, welche nicht über die gesamte Fertigungsdauer präzise oder hinreichend reproduzierbar gefertigt sind. Insbesondere die Lagendicke wird häufig nicht genügend präzise gefertigt.

Vor diesem Hintergrund ist es daher Aufgabe der Erfindung, ein verbessertes Verfahren zur additiven Fertigung anzugeben, mit welchem insbesondere mit höherer Präzision und verbesserter Reproduzierbarkeit gefertigt werden kann. Ferner ist es Aufgabe der Erfindung, eine verbesserte Fertigungsanlage zu schaffen, mittels welcher das verbesserte Verfahren zur additiven Fertigung ausgeführt werden kann.

Diese Aufgabe der Erfindung wird mit einem Verfahren zur additiven Fertigung mit den in Anspruch 1 angegebenen Merkmalen sowie mit einer Fertigungsanlage mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zur additiven Fertigung eines Werkstücks mittels eines Bearbeitungskopfs. Bei dem erfindungsgemäßen Verfahren wird die Geschwindigkeit des Bearbeitungskopfs in Abhängigkeit von einer vorgegebenen und/oder erfassten Geometrie des Werkstücks gestellt.

Mittels des erfindungsgemäßen Verfahrens kann aufgrund der Geschwindigkeit des Bearbeitungskopfes die Auftragshöhe von Werkstoff auf das bislang gefertigte Werkstück flexibel und mit einer kurzen Reaktionszeit eingestellt werden. Typisch wird bei ansonsten konstant gehaltenen Prozessparametern bei einer Bewegung des Bearbeitungskopfes mit einer hohen Geschwindigkeit weniger Werkstoff je Flächeneinheit einer Oberfläche des Werkstücks auf dieses Werkstück aufgetragen als bei einer geringeren Geschwindigkeit des Werkstücks. Auf diese Weise kann somit die lokale flächenbezogene Masse an aufgetragenen Werkstoff eingestellt und folglich die Geometrie, insbesondere eine Höhe, oder mit anderen Worten eine Dicke, einer mittels des Verfahrens neu an dem Werkstück aufgetragenen Schicht eingestellt werden. Im Vergleich mit einer Anpassung etwa eines Massenstromes an zugeführtem Werkstoff kann eine Anpassung der Geschwindigkeit des Bearbeitungskopfes sehr rasch und reaktionsschnell erfolgen.

Im Vergleich zum erfindungsgemäßen Verfahren wird bei bislang bekannten Lösungen abhängig von einer Analyse des Fertigungsprozesses ein Satz von anlagen- und materialspezifisch geeigneten Prozessparametern ermittelt und fix, d.h. während einer additiven Fertigung konstant, eingestellt. Hierdurch wird jedoch bei diesen bekannten Lösungen lediglich die Wahrscheinlichkeit des Auftretens von Störeinflüssen gemindert. Im Falle allerdings des Auftretens von Störeinflüssen kann mit solchen bekannten Lösungen während der Fertigung selbst nicht reagiert werden.

Mittels des erfindungsgemäßen Verfahrens wird die Geschwindigkeit des Bearbeitungskopfes durch eine insbesondere prozessparallele Anpassung auf Grundlage der ermittelten Geometrie des Werkstücks und/oder der vorgesehenen Geometrie des Werkstücks angepasst, sodass mittels der Geschwindigkeit des Bearbeitungskopfes auf Störeinflüsse, wie sie sich insbesondere infolge von Variationen des Werkstoffstroms pulverförmigen Werkstoffs und/oder thermischen und/oder chemischen Prozessen, welchen der Werkstoff unterliegt und/oder Bewegungen wie insbesondere Schwingungen der Fertigungsanlage und/oder des Bearbeitungskopfes, reagiert werden kann.

Erfindungsgemäß lassen sich solche Störeinflüsse mittels einer Stellung der Geschwindigkeit des Bearbeitungskopfes leicht kompensieren. Folglich lassen sich mit dem erfindungsgemäßen Verfahren eine hohe Präzision der additiven Fertigung und eine hohe Reproduzierbarkeit erfindungsgemäß hergestellter Werkstücke erreichen. Zudem sind aufgrund der Störgrößenkompensation weniger empirische Prozessuntersuchungen zur Ermittlung geeigneter Prozessparameter nötig. Die Erfindung reduziert somit die Kosten durch Reduktion der Anzahl an Fehlteilen und nötigen Prozessuntersuchungen.

Ferner handelt es sich bei der Bewegung des Bearbeitungskopfes um einen Prozessparameter, welcher bei der additiven Fertigung regelmäßig zu stellen erforderlich ist. Folglich ist eine Ausführung des erfindungsgemäßen Verfahrens besonders einfach möglich, da zur Anpassung der Geschwindigkeit des Bearbeitungskopfes keine zusätzliche Hardware oder Werkzeuge erforderlich sind. Lediglich eine Anpassung einer typischerweise ohnehin vorhandenen Steuerung an das erfindungsgemäße Verfahren ist zur Ausführung des erfindungsgemäßen Verfahrens zweckdienlich. Das erfindungsgemäße Verfahren ist somit vorteilhaft besonders kostengünstig.

Insbesondere wird die Geschwindigkeit des Bearbeitungskopfes gestellt, indem eine Steuerung von den Bearbeitungskopf bewegenden oder führenden Achsen, insbesondere Vorschubachsen, geeignet gesteuert werden. Vorzugsweise erfolgt die Steuerung der Achsen mittels numerischer Steuerung (NC = engl. "*Numerical Control*").

In einer vorteilhaften Weiterbildung des erfindungsgemäßen Verfahrens wird die Geschwindigkeit des Bearbeitungskopfs in Abhängigkeit von einer Differenz von vorgegebener und erfasster Geometrie des Werkstücks gestellt. Auf diese Weise kann mittels des erfindungsgemäßen Verfahrens leicht derart gestellt werden, dass die Differenz von vorgegebener und erfasster Geometrie des Werkstücks verschwindet.

Bevorzugt umfasst bei dem erfindungsgemäßen Verfahren die Geometrie eine Höhe, insbesondere eine Höhe in Richtung quer, vorzugsweise senkrecht, zu Richtungen zumindest eines Verfahrwegs des Bearbeitungskopfs und/oder zu Obeflächenerstreckungen eines Substrats, an welchem das Werkstück gefertigt wird. Wie bereits zuvor erläutert, lässt sich insbesondere die Dicke einer auf dem Werkstück abgeschiedenen Schicht und folglich die Höhe des resultierenden Werkstücks leicht mittels einer korrespondierenden Stellung der Geschwindigkeit des Werkstücks beeinflussen.

Geeignet wird in einer vorteilhaften Weiterbildung des erfindungsgemäßen Verfahrens ein Verfahrweg des Bearbeitungskopfs bestimmt und die Geschwindigkeit des Bearbeitungskopfs entlang zumindest eines Abschnitts dieses Verfahrwegs gestellt. Häufig wird bei additiven Fertigungsverfahren ein Bearbeitungskopf entlang zueinander und zu einem Substrat paralleler Ebenen verfahren, um das Werkstück lagen-, d.h. schichtweise, aufzubauen. In dieser Weiterbildung der Erfindung lässt sich das erfindungsgemäße Verfahren unaufwendig und ohne weiteren Anpassungsbedarf in die üblichen Prozessschritte integrieren, indem lediglich die Geschwindigkeit des Bearbeitungskopfes variabel gehalten und geeignet angepasst wird.

Zweckmäßig bildet bei dem Verfahren gemäß der Erfindung die Geschwindigkeit des Bearbeitungskopfes eine Stellgröße eines Regelverfahrens und die Geometrie des Werkstücks oder einer aktuell gefertigten Lage eine Regelgröße des Regelverfahrens. Auf diese Weise lässt sich mittels der Geschwindigkeit des Bearbeitungskopfs die Geometrie des Werkstücks einfach regeln, wobei ggf. auftretende Störeinflüsse mittels des Regelverfahrens selbsttätig weitestgehend eliminiert werden können.

Vorzugswiese bildet bei dem erfindungsgemäßen Verfahren der Ort des Bearbeitungskopfes eine Regelgröße eines zweiten Regelverfahrens und ein Steuersignal zur Steuerung einer Bewegung des Bewegungskopfes eine Stellgröße des zweiten Regelverfahrens. Besonders bevorzugt werden bei dem erfindungsgemäßen Verfahren erstes Regelverfahren und zweites Regelverfahren in Kombination eingesetzt. In dieser Weiterbildung der Erfindung werden folglich zwei Regelkreise überlagert: Zum einen wird ein erster Regelkreis genutzt, die Geschwindigkeit des Bearbeitungskopfes anzupassen. Ein zweiter Regelkreis wird dazu genutzt, eine Bewegungsbahn für den Bearbeitungskopf anzupassen.

Die Art der Regelung kann bei den vorgenannten zwei Regelverfahren grundsätzlich frei gewählt werden. Insbesondere können eine Fuzzy-Regelung und/oder eine Sliding-Mode-Regelung und/oder eine modellprädiktive Regelung und/oder eine sonstige Regelung herangezogen werden. Die Regelung kann vollständig in eine Software zur Bestimmung eines Verfahrwegs integriert sein, etwa in eine numerische Steuerung, vorzugsweise mithilfe von Compilezyklen und/oder Synchronaktionen.

Vorteilhaft erfolgt bei dem Verfahren gemäß der Erfindung die Fertigung mittels Laserauftragsschweißens und ist der Bearbeitungskopf ein Laserauftragsschweißkopf. Gerade beim Laserauftragsschweißen lassen sich vorteilhaft Störeinflüsse kompensieren. Geeigneterweise weist der Bearbeitungskopf eine Düse für den Auslass pulverförmigen metallischen Werkstoffs sowie eine Fokussieroptik zur Fokussierung eines den Werkstoff aufschmelzenden Laserstrahls auf.

Bevorzugt wird bei dem erfindungsgemäßen Verfahren die Geometrie des Werkstücks erfasst, insbesondere mittels eines Sensors, welcher bevorzugt im Bearbeitungskopf angeordnet ist. Besonders bevorzugt wird ein interferometrischer Abstandsmesser herangezogen, wie er als In-Process-Depth-Meter des Unternehmens Precitec GmbH bekannt ist und in der Druckschrift DE 10 2014 011 569 A1 beschrieben ist.

Alternativ und ebenfalls bevorzugt wird die Höhe des Werkstücks nicht mittels Sensoren erfasst, sondern mittels Schätzung ermittelt, d.h. bestimmt.

Die erfindungsgemäße Fertigungsanlage dient zur additiven Fertigung und umfasst einen Bearbeitungskopf und eine Steuerung zur Bewegung des Bearbeitungskopfs. Bei der erfindungsgemäßen Fertigungsanlage ist die Steuerung zur Ausführung eines Verfahrens wie vorhergehend beschrieben ausgebildet.

Die Fertigungsanlage weist in einer zweckmäßigen Weiterbildung der Erfindung zumindest einen Sensor zur Erfassung der Geometrie des Werkstücks auf.

Bei der Fertigungsanlage gemäß der Erfindung weist der Sensor bevorzugt einen interferometrischen Abstandsmesser auf. Besonders bevorzugt ist der interferometrische Abstandsmesser ein Abstandsmesser, wie er als In-Process-Depth-Meter des Unternehmens Precitec GmbH bekannt ist und in der Druckschrift DE 10 2014 011 569 A1 beschrieben ist.

Nachfolgend wird die Erfindung anhand eines in der Zeichnung dargestellten Ausführungsbeispiels näher erläutert. Es zeigen:
- Fig. 1: eine erfindungsgemäße Fertigungsanlage schematisch in einer Seitenansicht sowie
- Fig. 2: ein Ablaufdiagramm eines erfindungsgemäßen Verfahrens zur additiven Fertigung eines Werkstücks schematisch in einer Prinzipskizze.

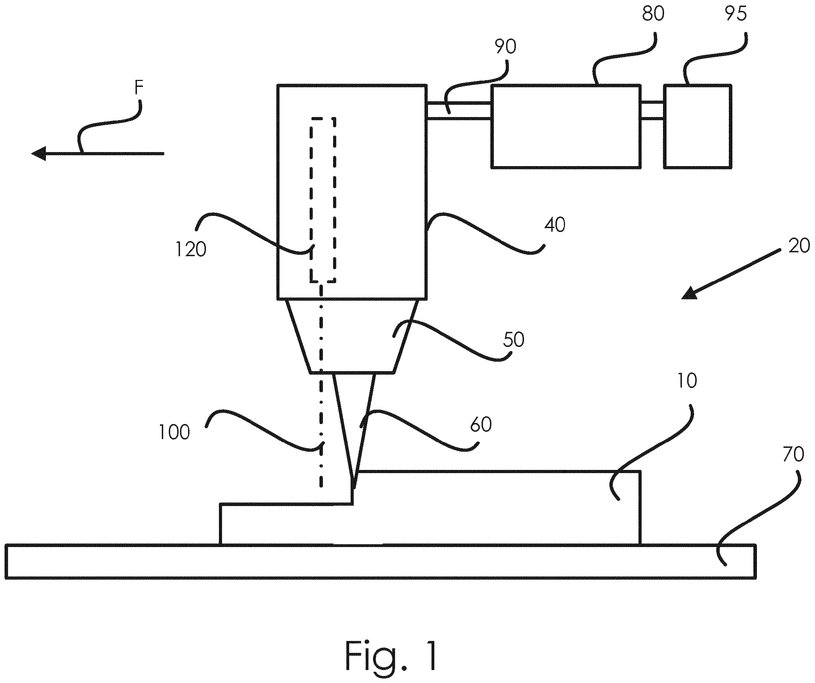

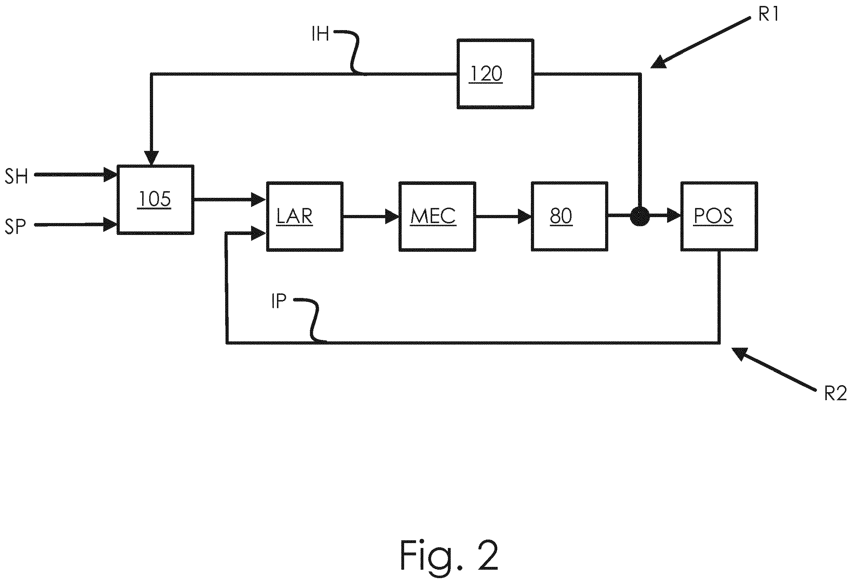

Mittels der in Fig. 1 dargestellten erfindungsgemäßen Fertigungsanlage 20 zur additiven Fertigung eines Werkstücks 10 wird das in Fig. 2 dargestellte erfindungsgemäße Verfahren durchgeführt.

Die erfindungsgemäße Fertigungsanlage 20 zur additiven Fertigung eines Werkstücks 10 umfasst in an sich bekannter Weise einen Bearbeitungskopf 40, welcher zum Laserauftragsschweißen (LMD = engl. "*Laser Metal Deposition*") ausgebildet ist. Der Bearbeitungskopf 40 weist dazu eine Düse 50 auf, mittels welcher Werkstoff 60 in Gestalt eines Metallpulvers aus der Düse 50 ausgeleitet wird. Ein innerhalb des Bearbeitungskopfes 40 enthaltener optischer Aufbau (in den Figuren nicht eigens gezeigt) sendet aus der Düse 50 zugleich einen sich außerhalb der Düse fokussierenden Laserstrahl aus, welcher den Werkstoff 60 aufschmilzt. Mittels des Bearbeitungskopfes 40 wird der aufgeschmolzene Werkstoff 60 auf einer Oberfläche des Werkstücks 10 abgeschieden.

Das Werkstück 10 wird auf einem ebenen, flächigen Substrat 70 abgeschieden. In weiteren, nicht eigens gezeigten Ausführungsbeispielen, welche im Übrigen dem dargestellten Ausführungsbeispiel entsprechen, kann das Substrat auch eine Oberfläche in Form einer Freiformfläche aufweisen. Zum Abscheiden des Werkstücks 10 auf dem Substrat 70 wird der Bearbeitungskopf 40 im Wesentlichen auf programmierten Werkzeugbahnen parallel zur Oberfläche des Substrats 70 entlang von Bahnen F verfahren. Dazu weist die Fertigungsanlage 20 ein Positioniersystem auf, welches als mehrachsige Fahreinrichtung 80 ausgebildet ist. Der Bearbeitungskopf 40 ist an die Fahreinrichtung 80 mittels einer Halterung 90 starr angebunden und somit mit der Fahreinrichtung 80 bewegungsgekoppelt. Mittels einer Ansteuerung der Achsen der mehrachsigen Fahreinrichtung 80 wird der Bearbeitungskopf 40 bewegt.

Die Fahreinrichtung 80 wird mittels einer Steuerung 95 derart gesteuert, dass sie den Bearbeitungskopf 40 entlang einer Bahn F bewegt. Die Steuerung 95 umfasst dazu zunächst eine Bahnsteuerungsteuerung 105, welche die Sollposition SP des Bearbeitungskopfes 40 heranzieht. Die Bahn F wird aus der Geometrie des Werkstücks 10 abgeleitet. Die Position des Bearbeitungskopfs 40 wird während des Verfahrens entlang der Bahn F als Regelgröße mittels eines Lagereglers LAR, welcher ebenfalls Teil der Steuerung 95 ist, geregelt. Mittels einer Ansteuerung MEC der Fahreinrichtung 80, die ebenfalls Teil der Steuerung 95 ist, wird der Bearbeitungskopf 40 mit einer eingestellten Geschwindigkeit verfahren. Zu regelmäßig, hier zeitlich äquidistant, aufeinanderfolgenden Zeitpunkten wird die mittels der Ansteuerung MEC angefahrene Position des Bearbeitungskopfs 40 mittels eines Positionsmesssystem POS, im dargestellten Ausführungsbeispiel eines optischen Sensors, überprüft. Das Ergebnis dieser Überprüfung liefert die Istposition IP, welche dem Eingang des Lagereglers LAR zurückgeliefert wird, sodass der Eingang des Lagereglers LAR die tatsächliche aktuelle Ist-Position erhält und folglich die Bahn des Bearbeitungskopfs 40 präzise steuert. Diese Rückkopplung der Istposition IP bildet einen Regelkreis R2 zur Regelung der Position des Bearbeitungskopfs 40.

Zusätzlich ist ein weiterer Regelkreis R1 vorhanden, welcher zusätzlich zur Position des Bearbeitungskopfs 40 die Geschwindigkeit des Bearbeitungskopfs 40 entlang der Bahn einstellt. Dazu wird die während des Laserauftragsschweißens mit einem interferometrischen Sensor 120 der Abstand des Bearbeitungskopfes 40 von einer Oberfläche des Werkstücks 10 überprüft. Der interferometrische Sensor 120 ermittelt den Abstand des Bearbeitungskopfs 40 zum Werkstück 10 mittels Interferometrie von Laserlicht 100. Beispielsweise kann als intererometrischer Sensor 120 ein interferometrischer Abstandsmesser herangezogen werden, wie er als In-Process-Depth-Meter des Unternehmens Precitec GmbH bekannt ist und in der Druckschrift DE 10 2014 011 569 A1 beschrieben ist. Die Steuerung 95, hier die Bahnsteuerung 105 der Steuerung 95, erhält als Eingangsgröße die Sollhöhe SH des Werkstücks 10.

Gerät die Höhe des Werkstücks 10 beim Laserauftragsschweißen zu groß, so registriert der Sensor 120 einen zu geringen Abstand des Bearbeitungskopfs vom Werkstück 10 verglichen zur eigentlich beim Laserauftragsschweißen angestrebten Sollhöhe SH. Diese aktualisierte Isthöhe IH des Werkstücks 10 wird erfasst und der Steuerung 95 als aktuelle Eingangsgröße übermittelt. Mittels dieses Regelkreises R1 kann jeweils die Steuerung des Bearbeitungskopfes 40 entang einer solchen Bahn mit einer solchen Geschwindigkeit erfolgen, dass die Isthöhe IH des Werkstücks 10 möglichst genau der Sollhöhe SH des Werkstücks 10 durch Anpassung der Prozessparameter, hier der Geschwindigkeit des Bearbeitungskopfs 40 sowie zusätzlich ggf. weitere Prozessparameter, angepasst wird.

Die Regelverfahren der Regelkreise R1 und R2 können auf unterschiedliche Weise realisiert sein. Vorliegend wird als Regelverfahren eine Fuzzy-Regelung herangezogen. In weiteren, nicht eigens dargestellten Ausführungsbeispielen kann alternativ oder zusätzlich eine Sliding-Mode-Regelung oder eine modellprädikative Regelung eingesetzt werden.

## Patentansprüche

1. Verfahren zur additiven Fertigung eines Werkstücks (10) mittels eines Bearbeitungskopfs (40), bei welchem die Geschwindigkeit des Bearbeitungskopfs (40) in Abhängigkeit von einer vorgegebenen (SH) und/oder erfassten Geometrie (IH) des Werkstücks (10) gestellt wird.

2. Verfahren nach dem vorhergehenden Anspruch, bei welchem die Geschwindigkeit des Bearbeitungskopfs (40) in Abhängigkeit von einer Differenz von vorgegebener (SH) und erfasster Geometrie (IH) des Werkstücks (10) gestellt wird.

3. Verfahren nach einem der vorhergehenden Ansprüche, bei welchem die Geometrie eine Höhe (SH), insbesondere eine Höhe (SH) in Richtung quer, insbesondere senkrecht, zu Richtungen zumindest eines Verfahrwegs (F) des Bearbeitungskopfs (40) und/oder zu Obeflächenerstreckungen eines Substrats (70), an welchem das Werkstück (10) gefertigt wird.

4. Verfahren nach einem der vorhergehenden Ansprüche, bei welchem ein Verfahrweg (F) des Bearbeitungskopfs (40) bestimmt wird und die Geschwindigkeit des Bearbeitungskopfs (40) entlang zumindest eines Abschnitts dieses Verfahrwegs (F) gestellt wird.

5. Verfahren nach einem der vorhergehenden Ansprüche, bei welchem die Geschwindigkeit des Bearbeitungskopfes (40) eine Stellgröße eines Regelverfahrens (R1) bildet und die Geometrie (SH) des Werkstücks (10) eine Regelgröße bildet.

6. Verfahren nach einem der vorhergehenden Ansprüche, bei welchem der Ort des Bearbeitungskopfes (40) eine Regelgröße eines zweiten Regelverfahrens (R2) bildet und ein Steuersignal zur Steuerung einer Bewegung des Bewegungskopfes (40) eine Stellgröße des zweiten Regelverfahrens (R2) bildet.

7. Verfahren nach einem der vorhergehenden Ansprüche, bei welchem die Fertigung mittels Laserauftragsschweißens erfolgt und der Bearbeitungskopf (40) ein Laserauftragssschweißkopf ist.

8. Verfahren nach einem der vorhergehenden Ansprüche, bei welchem die Geometrie des Werkstücks erfasst wird, insbesondere mittels eines Sensors (120), welcher bevorzugt im Bearbeitungskopf (40) angeordnet ist.

9. Fertigungsanlage zur additiven Fertigung, umfassend einen Bearbeitungskopf (40) und eine Steuerung (95) zur Bewegung des Bearbeitungskopfs, bei welcher die Steuerung (95) zur Ausführung eines Verfahrens nach einem der vorhergehenden Ansprüche ausgebildet ist.

10. Fertigungsanlage nach einem der vorhergehenden Ansprüche, welche zumindest einen Sensor (120) zur Erfassung der Geometrie des Werkstücks (10) aufweist.

11. Fertigungsanlage nach einem der vorhergehenden Ansprüche, bei welchem der Sensor (120) einen interferometrischen Abstandsmesser aufweist.
